# DEMANDE DE BREVET EUROPEEN

(11) **EP 1 978 152 A1**
(43) Date de publication de la demande: **08.10.2008**
(21) Numéro de dépôt: 08153913.2
(22) Date de dépôt: 01.04.2008
(51) Int. Cl.: D06M 23/08, D06P 3/24, D06M 23/12

(54) **Procede de modification de fibres d'aramide et procede de teinture de ces fibres**

(30) Priorité: 03.04.2007 FR 0754244
(71) Demandeur: COMMISSARIAT A L'ENERGIE ATOMIQUE, 75015 Paris (FR); UNIVERSITE CLAUDE BERNARD - LYON 1, 69100 Villeurbanne (FR); Centre National de la Recherche Scientifique, 75016 Paris (FR)
(72) Inventeur: Raccurt, Olivier, 38730 CHELIEU (FR); Diop Bocard, Noël, 69003 LYON (FR); Roux, Stéphane, 69100 VILLEURBANNE (FR); Tillement, Olivier, 69270 FONTAINE SAINT MARTIN (FR)
(74) Mandataire: Ilgart, Jean-Christophe

(57) **Abrégé**

La présente invention a trait à un procédé de modification de fibres d'aramide, en vue d'améliorer leur aptitude à être teintes comprenant les étapes suivantes :
a)une étape de traitement desdites fibres de façon à abaisser la température de transition vitreuse Tg de celles-ci à une valeur Tg₁, Tg₁ étant inférieure à Tg ;
b) une étape de mise en contact desdites fibres ainsi traitées avec une solution comprenant des nanoparticules à une température supérieure ou égale à Tg₁.

## Description

### DOMAINE TECHNIQUE

L'invention a trait à un procédé de modification de fibres d'aramide, en vue de faciliter ou d'engendrer la coloration de celles-ci.

Le domaine général de l'invention est donc celui des fibres d'aramide.

### ETAT DE LA TECHNIQUE ANTÉRIEURE

Les fibres d'aramide appartiennent à la famille des fibres synthétiques, leur nom usuel étant le Nomex®, le Kevlar® et le Kermel®.

D'un point de vue structural, les fibres d'aramide comprennent une chaîne synthétique polyamide, dans laquelle au moins 85% des groupements amides sont liés directement à deux groupements aromatiques, dont le motif répétitif principal répond à la formule suivante : 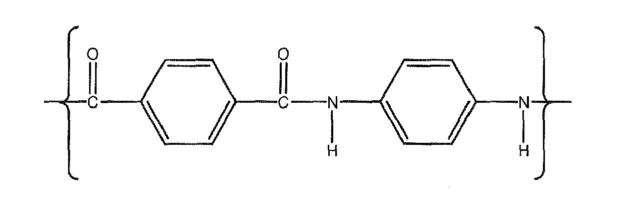 des formes dérivées de ce motif pouvant exister avec des substitutions sur les cycles aromatiques et une substitution de l'hydrogène du groupe -NH-.

Ces fibres présentent une résistance mécanique et thermique élevée ainsi que des propriétés ignifuges. Elles sont donc largement utilisées comme fibres textiles destinées à être en contact avec le feu ou avec des hautes températures, notamment pour concevoir des tenues de pompier, d'astronautes et de pilotes.

Les fibres d'aramide présentent à l'état naturel une couleur jaune. Elles peuvent donc être amenées à subir un procédé de teinture en vue de leur donner une couleur différente de celle de leur état naturel.

Les procédés de teinture actuels peuvent être classés en deux types :
a) les procédés de teinture consistant à teindre le polymère en masse sous forme de fibres lors de la synthèse de celui-ci, permettant ainsi de colorer en masse les fibres au fur et à mesure de leur synthèse ;
b) les procédés de teinture consistant à teindre les fibres une fois synthétisées, voire même une fois tissées.

Le type a) est délaissé toutefois par les industriels au profit du type b), dans la mesure où le type a) n'offre pas la souplesse et la réactivité d'une teinture sur tissus.

De nombreuses publications décrivent des procédés de teinture du type b).

Ainsi, le document EP 0557734 [1] décrit un procédé de teinture de fibres d'aramide consistant à mettre en contact lesdites fibres avec un colorant ayant une masse moléculaire de 400 ou inférieure et présentant un coefficient spectral de transmission de 20% ou inférieur, avec ajustement du pH à une valeur de 4 à 5 en ajoutant de l'acide acétique.

Le document CA 2 428 758 [2] décrit un procédé de teinture consistant à mettre en contact des fibres d'aramide avec une composition comprenant un colorant cationique et un assistant de coloration du type cyclohéxènone. Cette composition a pour particularité de permettre un gonflement des fibres d'aramide et une incorporation des colorants dans les espaces libres ménagés par l'augmentation de volume. Toutefois, les seuls colorants susceptibles de se fixer dans ces espaces sont des colorants présentant une affinité chimique vis-à-vis des fibres d'aramide, ces colorants étant généralement des colorants cationiques.

D'autres auteurs proposent de modifier la structure chimique des fibres d'aramide lors de la synthèse de celles-ci, afin de rendre ces fibres plus compatibles avec les colorants, notamment les colorants basiques.

Ainsi, GB 1 221 493 [3] décrit un procédé de modification de polyamides linéaires, tels que l'aramide, comprenant une extrémité -NH₂ libre, consistant à faire réagir par chauffage un composé triazine avec ces polyamides, lequel composé une fois greffé sur le polyamide lui confère une compatibilité avec les colorants basiques.

US 4,391,968 [4] décrit un procédé de préparation de polyamides présentant une affinité avec des colorants basiques par incorporation dans le milieu réactionnel, en sus des monomères précurseurs des motifs amides, d'un monomère dicarboxylique et d'un sel d'acide sulfonique dicarboxylique particuliers.

Toutefois, ces procédés présentent l'inconvénient de modifier la structure chimique des polyamides, ce qui peut influer notamment de façon négative sur la résistance mécanique des fibres élaborées à partir de ces polyamides.

Des auteurs proposent de modifier la surface de la fibre d'aramide par un traitement approprié afin de favoriser ensuite l'accroche des colorants. Ainsi, dans Advances in Textiles Technology, pages 6-7 [5], il est décrit un procédé consistant à soumettre des fibres d'aramide à un traitement plasma, afin de générer des sites d'activation, sur lesquels les colorants vont ensuite pouvoir se fixer. Toutefois, ce type de traitement engendre une dégradation des propriétés mécaniques des fibres, ce qui est peu recommandable lorsque ces fibres sont destinées à être utilisées dans des domaines nécessitant d'excellentes propriétés en matière de résistance au feu et aux produits chimiques.

Ainsi, il existe un véritable besoin pour un procédé de modification des fibres d'aramide ne présentant pas les inconvénients de l'art antérieur et notamment :
- qui n'engendre pas une modification de la structure chimique des fibres et par voie de conséquence, des propriétés physico-chimiques de celles-ci ;
- qui génèrent des fibres pouvant être colorées par toutes sortes de colorants, à savoir, par exemple, des colorants cationiques, des colorants anioniques.

### EXPOSÉ DE L'INVENTION

Ainsi, l'invention a trait, en premier lieu, à un procédé de modification de fibres d'aramide, en vue d'améliorer leur aptitude à être teintes comprenant les étapes suivantes :
a)une étape de traitement desdites fibres de façon à abaisser la température de transition vitreuse Tg de celles-ci à une valeur Tg₁, Tg₁ étant inférieure à Tg ;
b)une étape de mise en contact desdites fibres ainsi traitées avec une solution comprenant des nanoparticules à une température supérieure ou égale à Tg₁.

On précise que selon l'invention, on entend généralement par fibres d'aramide des fibres comprenant une chaîne synthétique polyamide, dans laquelle au moins 85% des groupements amides sont liés directement à deux groupements aromatiques, dont le motif répétitif principal répond à la formule suivante : 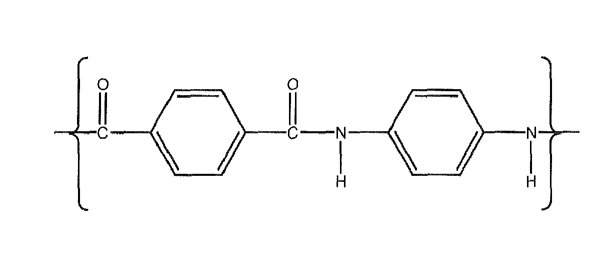 des formes dérivées de ce motif pouvant exister avec des substitutions sur les cycles aromatiques et une substitution de l'hydrogène du groupe -NH-.

On précise que selon l'invention on entend généralement par nanoparticules des particules présentant un diamètre allant de 1 à 500 nm, de préférence de 8 à 30 nm, de préférence encore de 10 à 20 nm.

Les fibres d'aramide comprennent, à l'état non traité, en majorité des zones cristallines et en minorité des zones amorphes. De part cette très forte cristallinité, les fibres d'aramide sont peu enclines à permettre la diffusion et la liaison de composés.

On précise que la température de transition vitreuse est une caractéristique intrinsèque des fibres, qui correspond notamment à la température pour laquelle la mobilité des chaînes est augmentée de façon significative, générant ainsi une augmentation du volume libre.

En abaissant la température de transition vitreuse des fibres d'aramide de Tg à Tg₁ lors de l'étape a), on permet ainsi, lorsque les fibres sont portées à une température supérieure ou égale à Tg₁, une augmentation de la mobilité des chaînes, et par voie de conséquence une ouverture des zones amorphes à une température moindre (par exemple, on peut passer d'une température de transition vitreuse d'environ 200°C à environ 120°C) lors de l'étape b). Cette température moindre se révèle moins agressive vis-à-vis des colorants et permet de mettre en oeuvre le procédé à des températures moins importantes.

L'étape a) peut consister à abaisser la température de transition vitreuse de façon à ce que la température de transition vitreuse Tg₁ soit située dans une gamme allant de 100 à 150°C.

On précise que la diminution de la température de transition vitreuse peut être aisément mesurée par l'homme du métier par des techniques de DCS (correspondant à l'abréviation de Differential Scanning Calorimetry) en capsule scellée ou des techniques de DMA (correspondant à l'abréviation de Dynamic Mechanical Analysis).

Le traitement destiné à abaisser la température de transition vitreuse (étape a) des fibres peut consister à mettre celles-ci en contact avec un solvant choisi parmi l'alcool benzylique, le cyclohexanone, le diméthylformamide, le diméthylacétamide, le diméthylsulfoxyde, l'acétophénone, le benzaldéhyde et les mélanges de ceux-ci.

Une fois l'abaissement de la température de transition vitreuse obtenue par le traitement de l'étape a), les fibres d'aramide sont mises en contact avec une solution comprenant des nanoparticules, et ce à une température supérieure ou égale à la température de transition vitreuse Tg₁. En travaillant à une température supérieure ou égale à Tg₁, à savoir la nouvelle température de transition vitreuse obtenue à l'issue de l'étape a), l'on obtient des fibres présentant une mobilité accrue de ses chaînes de polymère et, par voie de conséquence, une ouverture des zones amorphes, les nanoparticules comprises dans la solution pouvant ainsi s'incorporer dans les espaces libres ménagés par l'ouverture des zones amorphes.

Les nanoparticules incorporées peuvent être de plusieurs types.

Selon un premier mode de réalisation, il peut s'agir de nanoparticules ne comportant pas de colorant, mais qui présentent éventuellement des groupes aptes à se lier à la surface des fibres d'aramide par exemple par le biais de liaisons ioniques ou de liaisons faibles, telles que des liaisons hydrogène.

Ces nanoparticules peuvent être poreuses, auquel cas elles pourront accueillir dans leurs pores un ou plusieurs colorants. A titre d'exemples de telles nanoparticules, on peut citer des nanoparticules en SiO₂, TiO₂, ZnO, Al₂O₃, Fe₃O₄.

Ces nanoparticules peuvent comporter des groupes aptes à se lier, par exemple, par liaison ionique ou par des liaisons faibles, telles que les liaisons hydrogène, à des colorants ou à des particules contenant ces colorants. A titre d'exemples, on peut citer des nanoparticules de SiO₂ comportent à leur surface des fonctions -OH susceptibles de se lier, par exemple, par formation de liaisons hydrogène, avec des colorants comportant des fonctions aptes à créer ce genre de liaisons, tel que le colorant rhodamine, fluorescéine, Diamix. On peut citer également des nanoparticules comprenant à leur surface des fonctions acides, tels que -CO₂H, lesquelles seront susceptibles de se lier à des colorants cationiques et/ou comprenant à leur surface des fonctions basiques, tels que des fonctions amines, lesquelles seront susceptibles de se lier à des colorants anioniques. A titre d'exemples de telles nanoparticules, on peut citer des nanoparticules en SiO₂, TiO₂, ZnO, Al₂O₃, Fe₃O₄ ayant subi une fonctionnalisation permettant le greffage de fonctions acides ou basiques selon des techniques bien connues de l'homme du métier. Dans ce cas, les nanoparticules peuvent être définies comme des promoteurs d'adhérence.

Selon un second mode de réalisation, il peut s'agir de nanoparticules comportant un colorant, ce colorant étant généralement incorporé préalablement aux nanoparticules. A titre d'exemples, on peut citer des particules comprenant une enveloppe en SiO₂ et un coeur constitué du colorant, ou un colorant dispersé dans une nanoparticule ou un colorant disposé sous forme d'une couronne extérieure sur la nanoparticule tel qu'un colorant fluorescent. L'avantage de ce type de nanoparticules est de pouvoir incorporer tout type de colorants, notamment des colorants ne présentant pas du fait de ses fonctions une capacité intrinsèque à se lier aux fibres d'aramide, notamment les colorants anioniques ou encore ne présentant pas une bonne résistance à la température.

Les nanoparticules peuvent être préparées par un procédé sol-gel.

Dans le cadre de l'invention, le procédé sol-gel consiste généralement à préparer dans un premier temps une solution comprenant le ou les précurseurs desdites nanoparticules à l'état moléculaire (composés organométalliques, sels métalliques) et éventuellement le colorant, lorsque les nanoparticules contiennent ce dernier.

Dans un deuxième temps, la solution précédente est hydrolysée, de façon à former une dispersion de petites particules d'oxydes. Ensuite, l'on procède à une centrifugation de façon à récupérer les nanoparticules formées.

Les précurseurs moléculaires peuvent se présenter sous forme de sels inorganiques, tels que des halogénures, des nitrates. Ils peuvent se présenter également sous forme de composés organométalliques, tels que des alcoxydes.

En particulier, lorsque les nanoparticules sont constituées en tout ou partie de SiO₂, le précurseur moléculaire peut être un alcoxyde de silicium, tel que le tétraéthoxysilicate Si(OC₂H₅)₄, le tétraméthoxysilicate Si(OCH₃)₄.

Le solvant organique peut être un monoalcool aliphatique, tel que l'éthanol.

Les étapes a) et b) du procédé de l'invention peuvent être mises en oeuvre simultanément, notamment lorsque les fibres sont mises en contact avec une solution comprenant à la fois un agent apte à abaisser la température de transition vitreuse et des nanoparticules.

Une fois l'étape b) mise en oeuvre, le procédé de l'invention comprend, avantageusement, une étape c) d'abaissement de la température des fibres à une valeur inférieure à Tg₁. D'un point de vue pratique, cette étape d'abaissement de la température peut consister à séparer les fibres de la solution de l'étape b), de façon à ramener les fibres à température ambiante. Cette étape d'abaissement de la température se concrétise par une fermeture des zones amorphes et un emprisonnement de façon mécanique des nanoparticules au sein des fibres d'aramide. Cet emprisonnement « mécanique » s'ajoute à une éventuelle accroche chimique, dans le cas où les nanoparticules utilisées présenteraient des groupements chimiques de surface compatibles avec les fibres d'aramide, cette accroche chimique pouvant se traduire par des interactions faibles ou fortes.

Après l'étape d'abaissement de la température, le procédé peut comprendre, en outre, simultanément ou après l'étape c), une étape d) de rinçage des fibres, permettant notamment d'éliminer l'ensemble des réactifs n'ayant pas réagi, tels que les nanoparticules non accrochées aux fibres ou encore les autres constituants de la solution utilisée à l'étape b) .

Le procédé exposé ci-dessus est un procédé destiné à améliorer l'aptitude des fibres d'aramide à être teintes. Il peut donc être mis en oeuvre dans le cadre d'un procédé de teinture.

Ainsi, l'invention a trait, en second lieu, à un procédé de teinture de fibres d'aramide comprenant :
- une étape de mise en oeuvre du procédé de modification de fibres d'aramide tel que défini ci-dessus ;
- éventuellement une étape de mise en contact desdites fibres avec un colorant, en particulier, lorsque les nanoparticules ne contiennent pas de colorant.

On précise que ces deux étapes peuvent être réalisées de façon concomitante, si les fibres d'aramide sont mises en contact avec une solution comprenant à la fois un agent apte à diminuer la température de transition vitreuse, des nanoparticules et un colorant.

Dans ce cas, le procédé de coloration comprendra à son issue une étape destinée à abaisser la température du milieu réactionnel à une valeur inférieure à Tg1, de façon à refermer les zones amorphes en emprisonnant dans la fibre les nanoparticules et le colorant, permettant ainsi la fixation de la couleur.

Dans le cas où des nanoparticules comprenant un colorant sont fixées aux fibres d'aramide, l'étape de mise en contact avec un colorant après l'étape de fixation desdites nanoparticules n'est pas nécessaire. L'avantage d'utiliser des nanoparticules comportant un colorant est de pouvoir incorporer n'importe quel type de colorant, tels que les colorants fluorescents, et de protéger notamment celui-ci.

Dans le cas où les nanoparticules ne contiennent pas de colorant, les fibres d'aramide doivent être mises en contact avec un colorant, les nanoparticules servant de promoteur d'adhérence.

Le colorant peut être fixé sur les nanoparticules par voie sol-gel, soit directement soit par le biais de particules comprenant ledit colorant. Les nanoparticules fixées aux fibres d'aramide servent de point d'accroche et/ou de germe pour la croissance du matériau sol-gel comprenant le colorant. Par croissance de ce dernier, il est ainsi possible de couvrir une grande surface de la fibre. Par ce biais, il est également possible de greffer un nombre important de colorants sur ces nanoparticules.

Le colorant peut être fixé sur les nanoparticules par le biais de particules contenant des colorants ou qui constituent elles-mêmes des colorants, la fixation se faisant par des interactions ioniques, faibles ou covalentes. De telles particules peuvent être des particules de résine, de taille micrométrique, piégeant des pigments ou des colorants.

Le colorant peut être fixé sur les nanoparticules en occupant la porosité de celles-ci, le colorant ensuite pouvant diffuser sur la fibres.

Ainsi, l'innovation technique est d'être arrivé à fixer sur des fibres d'aramide des nanoparticules et de se servir ensuite de ces nanoparticules soit comme colorant (les colorants étant contenus dans les nanoparticules), soit comme point d'accroche pour soit des colorants sous forme moléculaire ou soit d'un matériau formé par voie sol-gel et qui contiendrait des colorants.

Outre l'aspect précité, la nature des nanoparticules employées peut permettre d'obtenir d'autres fonctions intéressantes. En particulier, il a été démontré que les colorants fixés sur certaines fibres peuvent être peu résistants aux UV. Ainsi, l'emploi de nanoparticules présentant une bonne absorption des UV (telles que les nanoparticules en TiO₂) permet de limiter la dégradation de la coloration de la fibre teintée dans le temps.

### EXPOSÉ DÉTAILLÉ DE MODES DE RÉALISATION PARTICULIERS

### EXEMPLE 1

Cet exemple illustre un procédé d'apprêtage de fibres d'aramide avec des nanoparticules de SiO₂, sur lesquelles on pourra fixer ultérieurement un colorant.

Dans un premier temps, un bain est préparé par mélange de 3,4 mL d'une solution de nanoparticules de SiO₂ (présentant un diamètre de 12,5 nm) à 0,1 % massique, de 15 mL d'alcool benzylique, le tout complété de 150 mL d'eau permutée. Le pH de bain de teinture est ajusté à une valeur de 3,5-4.

Le bain ainsi obtenu est ensuite mis en contact avec 5 g d'un textile d'aramide, l'ensemble étant chauffé à 120°C pendant 60 minutes.

Le textile d'aramide est ensuite récupéré du bain et rincé à l'eau froide.

Les fibres ainsi obtenues sont photographiées par microscopie à balayage électronique et montrent ainsi des nanoparticules fixées sur elles.

### EXEMPLE 2

Cet exemple illustre un procédé de teinture de fibres d'aramide par le biais de nanoparticules incoporées dans celles-ci, lesdites nanoparticules étant des nanoparticules de SiO₂ comprenant un colorant, en l'occurrence la rhodamine-B-isocyanate (RBITC).

Dans un premier temps, il est préparé une première solution (solution A) par mélange de 30 mL d'éthanol, de 4,46 mL de tétraéthoxysilane et 0,2 mg de rhodamine-B-isocyanate, ledit mélange étant agité pendant 1 heure.

Dans un deuxième temps, il est préparé une deuxième solution (solution B) par mélange de 30 mL d'éthanol, 0,65 mL d'une solution à 30% d'hydroxyde d'ammonium et 9,8 mL d'eau désionisée.

On ajoute la solution B à la solution A à température ambiante, le mélange résultant étant agité pendant 15 heures, puis on la neutralise.

Le mélange ensuite est centrifugé et lavé à l'éthanol jusqu'à ce que le surnageant soit clair. Les particules formées présentent un diamètre de 20 nm, mesuré avec un appareil Zetasizer Nano ZS.

Pour incorporer ces nanoparticules colorées dans les fibres, l'on procède de la même façon que dans l'exemple 1.

### EXEMPLE 3

Cet exemple illustre un procédé de teinture de fibres d'aramide par le biais de nanoparticules incorporées dans celles-ci, lesdites nanoparticules étant des nanoparticules de SiO₂ comprenant un colorant commercial.

Dans un premier temps, il est préparé une première solution (solution A) par mélange de 3 mL d'éthanol, de 1 mL de tétraéthoxysilane et 197,4 mg de colorant commercial, ledit mélange étant agité pendant 10 minutes puis il est ajouté à cette solution 0,8 mL d'une solution d'hydroxyde d'ammonium à 1 mol/L.

Dans un deuxième temps, il est préparé une deuxième solution (solution B) par mélange de 30 mL d'éthanol, 0,6 mL de tétraéthoxysilane. On ajoute la solution A à la solution B au goutte-à-goutte et on laisse sous agitation pendant 3 heures. Au mélange résultant, on ajoute 7,2 mL de tétraéthoxysilane et 4,7 mL d' une solution d'hydroxyde d'ammonium à 1 mol/L. On laisse sous agitation pendant 15 heures.

Le mélange ensuite est centrifugé et lavé à l'éthanol à trois reprises.

Les particules formées présentent un diamètre de 300 nm, mesuré avec un appareil Zetasizer Nano ZS.

Un spectre de fluorescence a montré un décalage du pic de fluorescence du colorant avant et après enrobage, ce qui prouve l'incorporation de ce colorant dans les particules de SiO₂.

Pour incorporer ces nanoparticules colorées dans les fibres, l'on procède d'une façon similaire à celle décrite dans l'exemple 1.

### EXEMPLE 4

Cet exemple illustre un procédé de teinture de fibres d'aramide par le biais de nanoparticules incorporées dans celles-ci, lesdites nanoparticules étant des nanoparticules de SiO₂ comprenant un colorant commercial.

Il est préparé une émulsion par mélange de 1,77g de Triton-X-100, 7,7 mL de cyclohexane, 1,6 mL de n-hexanol et 3,34 mL d'eau désionisée, ladite émulsion étant agitée pendant 15 minutes. On ajoute à l'émulsion 0,04 mL d'une solution à 1 mol/L contenant le colorant, suivi d'une agitation de 5 minutes et de l'ajout de 0,05 mL de tétraéthoxysilane et d'une nouvelle agitation de 30 minutes. Enfin, on ajoute 0,1 mL d'hydroxyde d'ammonium et on agite 24 heures à température ambiante. L'émulsion est ensuite déstabilisée par ajout d'éthanol puis est soumise à une centrifugation suivie d'un lavage à l'éthanol puis à l'eau désionisée.

Les particules obtenues présentent un diamètre de 100 nm, mesuré avec un appareil Zetasizer Nano ZS. Elles se redispersent bien dans l'eau.

Pour incorporer ces nanoparticules colorées dans les fibres, l'on procède d'une façon similaire à celle décrite dans l'exemple 1.

### EXEMPLE 5

Dans cet exemple, il est procédé, dans un premier temps, à la préparation de nanoparticules conformément à l'exemple 2. Les nanoparticules sont ensuite dispersées dans 31 mL d'éthanol. On ajoute au mélange résultant 26,8 mL de tétraéthoxysilane.

On trempe dans le mélange obtenu un textile apprêté par des nanoparticules de SiO₂ (d'un diamètre 12,5 nm) en présence d'alcool benzylique conformément aux conditions décrites dans l'exemple 1.

On laisse sous agitation à température ambiante pendant 1 heure.

Parallèlement, une solution B est réalisée par mélange de 32 mL d'eau permutée et 12 mL d'une solution d'acide chlorhydrique à pH 2. La solution B est ensuite ajoutée au mélange précédent et l'ensemble est porté à reflux à 70°C pendant 4 heures. Une fois l'ensemble revenu à température ambiante, l'on procède à un rinçage à l'eau froide.

## Revendications

1. Procédé de modification de fibres d'aramide, en vue d'améliorer leur aptitude à être teintes comprenant les étapes suivantes :
a)une étape de traitement desdites fibres de façon à abaisser la température de transition vitreuse Tg de celles-ci à une valeur Tg₁, Tg₁ étant inférieure à Tg ;
b)une étape de mise en contact desdites fibres ainsi traitées avec une solution comprenant des nanoparticules à une température supérieure ou égale à Tg₁.

2. Procédé selon la revendication 1, dans lequel les étapes a) et b) sont mises en oeuvre simultanément.

3. Procédé selon la revendication 1 ou 2, dans lequel l'étape de traitement a) consiste à mettre en contact lesdites fibres avec un solvant choisi parmi l'alcool benzylique, la cyclohexanone, le diméthylformamide, le diméthylacétamide, le diméthylsulfoxyde, l'acétophénone, le benzaldéhyde et les mélanges de ceux-ci.

4. Procédé selon l'une quelconque des revendications précédentes, dans lequel les nanoparticules ne comportent pas de colorant, et présentent des groupes aptes à se lier à la surface des fibres d'aramide.

5. Procédé selon l'une quelconque des revendications précédentes, dans lequel les nanoparticules sont poreuses.

6. Procédé selon la revendication 4, dans lequel les nanoparticules comportent des groupes aptes à se lier par liaison ionique ou par des liaisons faibles à des colorants ou à des particules contenant ces colorants.

7. Procédé selon la revendication 6, dans lequel les nanoparticules sont des nanoparticules de SiO₂ comportant à leur surface des fonctions -OH.

8. Procédé selon l'une quelconque des revendications 1 à 3, dans lequel les nanoparticules comprennent un colorant.

9. Procédé selon la revendication 8, dans lequel les nanoparticules comprenant un colorant comprennent une enveloppe en SiO₂ et un coeur constitué du colorant.

10. Procédé selon l'une quelconque des revendications précédentes, dans lequel les nanoparticules sont préparées par voie sol-gel.

11. Procédé selon l'une quelconque des revendications précédentes, comprenant, après l'étape b), une étape c) d'abaissement de la température des fibres à une valeur inférieure à Tg₁.

12. Procédé selon la revendication 11, comprenant, en outre, simultanément ou après l'étape c), une étape d) de rinçage des fibres.

13. Procédé de teinture de fibres d'aramide comprenant :
- une étape de mise en oeuvre du procédé de modification de fibres d'aramide tel que défini selon l'une quelconque des revendications 1 à 12 ;
- éventuellement une étape de mise en contact desdites fibres avec un colorant, en particulier, lorsque les nanoparticules ne contiennent pas de colorant.

14. Procédé de teinture selon la revendication 13, dans lequel le colorant est fixé sur les nanoparticules par voie sol-gel, soit directement soit par le biais de particules comprenant ledit colorant.
